# EUROPEAN PATENT SPECIFICATION

(11) **EP 2 692 704 B1**
(45) Date of publication and mention of the grant of the patent: **24.10.2018**
(21) Application number: 13425110.7
(22) Date of filing: 02.08.2013
(51) Int. Cl.: C03B 23/033, C03B 35/18

(54) **Apparatus for bending a glass pane, in particular with dynamical adjustment of the glass pane thickness**
Vorrichtung zum Biegen einer Glasscheibe, insbesondere mit dynamischer Anpassung der Glasscheibendicke
Appareil de pliage d'une vitre, notamment avec un ajustement dynamique de l'épaisseur de la vitre

(30) Priority: 03.08.2012 IT RM20120385; 03.08.2012 IT RM20120386
(43) Date of publication of application: 05.02.2014
(73) Proprietor: Mazzaroppi, Antonio, 04011 Aprilia (LT) (IT)
(72) Inventor: Mazzaroppi, Antonio, 04011 Aprilia (LT) (IT)
(74) Representative: Perronace, Andrea

(56) References cited:
- EP-A1- 0 261 611
- EP-B1- 1 385 795
- US-A- 5 443 609
- US-A1- 2006 254 317

## Description

The present invention concerns an apparatus for bending a glass pane, in particular with dynamical adjustment of the glass pane thickness.

More in detail, the invention concerns an apparatus that allows the bending of a glass pane, in such a way to have a bending radius that is uniform also locally. Further, the invention concerns an apparatus that allows the bending of a glass pane, dynamically and in such a way that the thickness of the glass will remain that that has been set, without local distortions due to the same bending.

The present invention claims the priority of the patent applications RM2012A000385 and RM2012A000386 in the name of the Applicant.

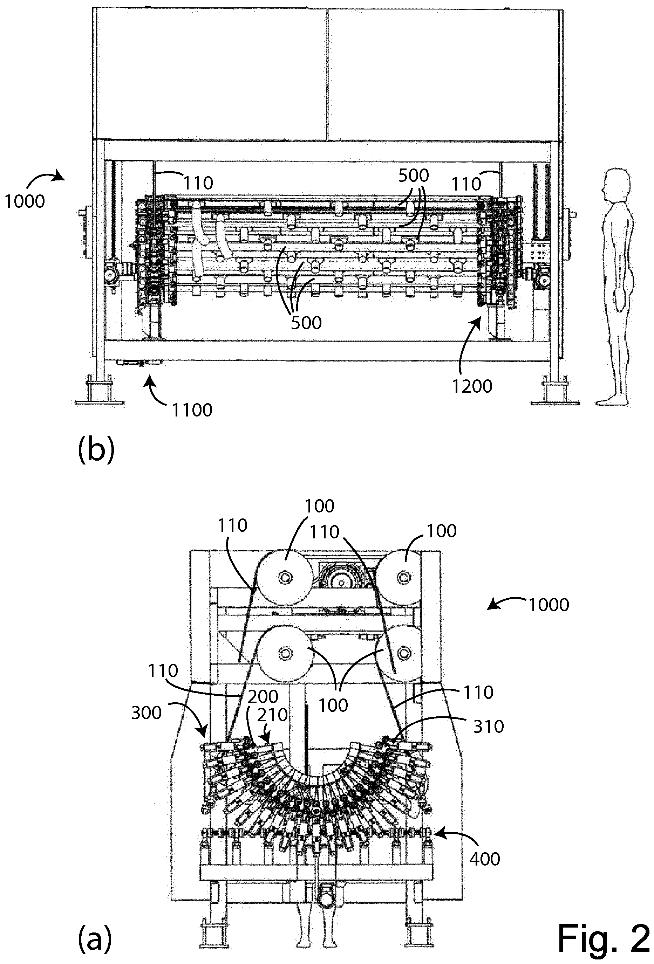

Making reference to figure 2, glass bending apparatuses 1000 are known, wherein a flat glass pane is made sliding on rolls first on a plane, till the positioning of the same pane (not shown). The rolls 500 are connected, at their two ends, at a left main bearings 1100 and right main bearings 1200, each comprising an upper chain 200 and a lower chain 300 constituted by links 210, 310 interconnected and mutually adjustable, in such a way that the bending of both chains 200,300 (by means of pulling of the ends 100,110) induces a disposition of the rolls 500 along a curve. This curve is that that is imposed to the glass pane that will find itself between the rolls connected at the upper chains of the two main bearings and the rolls connected at the lower chains of the two main bearings. The two main bearings are moved usually by an only engine and a mechanical coupling.

Naturally the glass pane will be at a temperature suitable for the bending, as known.

In the apparatus according to the prior art, the central link is fixed, because the links are moved by pulling of the ends of the chains 200,300.

In figure 2, further elements are shown, which are not belonging to the known art and that will be illustrated in the following.

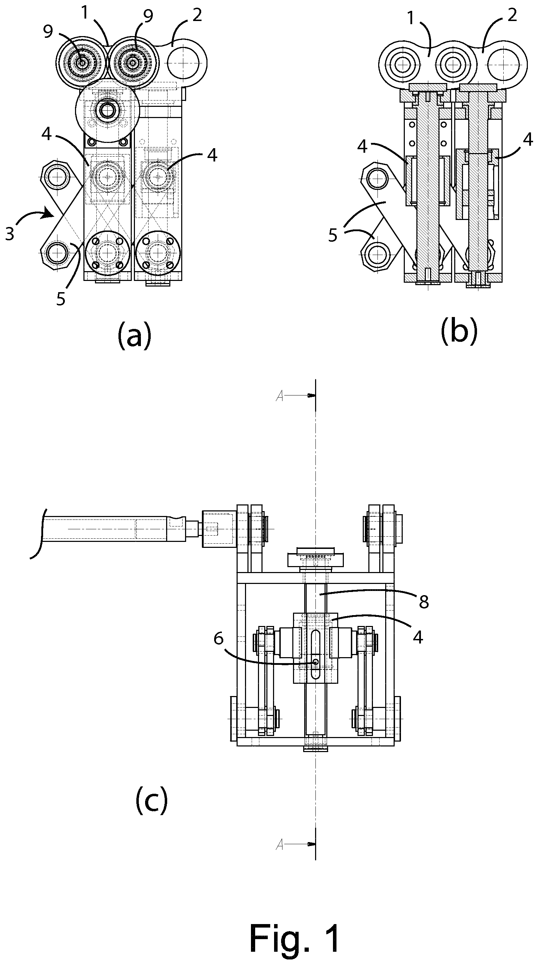

Making reference to figure 1, one illustrates the mechanism of bending adjustment according to the known art.

The mechanism 3 is said "compasses" mechanism, because it is composed by a series of little levers 5 mounted like compasses or folding. The little levers are hinged on points that are spaced apart uniformly on two rows, in such a way that the two rows can come closer of move away, adjusting thereby the distance between two elements 1,2 similar to the above links with reference to figure 2.

The distance between the above two rows is adjusted by pinion 9 connected to a screw 8. A female screw 4 is screwed to the screw 8 and presents an opening into which a little lever 6 integral to screw 8 can slide.

Figure (a) shows the folding 3 folded, with the minimum distance between the elements 1 and 2, figure (b) a section of the same mechanism, figure (c) a detail of the female screw and pinion.

The mechanism of transmission of motion is therefore a cascade mechanism, from pinion 9 to pinion 9 of the 1,2. As a consequence, because of the mechanical plays that adds up, the end links are rotated less than those of the first pinion that transmits the motion (central pinion).

Hence, one cannot obtain a uniform radius, both on the left and on the right of the central pinion. Moreover the deviation from the pre-set radius can vary between the right and left branches of the chain.

It is object of the present invention to provide an apparatus for the bending of glass panes that solves the problems and overcome the drawbacks of the prior art.

Making still reference to figure 2, glass bending apparatuses 1000 are known, wherein a flat glass pane is made sliding on rolls, first on a plane, till the positioning of the same pane (not shown). The rolls 500 are connected, at their two ends, to a left main bearings 1100 and a right main bearings 1200, each comprising an upper chain 200 and a lower chain 300 constituted respectively by links 210, 310 interconnected and mutually adjustable, in such a way that the bending of both chains 200,300 induces a disposition of the rolls 500 along a curve. This curve is the one that is imposed to the glass pane that will find between the rolls connected to the upper chains of the two main bearings and the rolls connected to the lower chains of the two main bearings. The two main bearings are moved by two independent, synchronized motors.

In figure 2, further elements not belonging to the known art are shown and illustrated in the following.

In the apparatus according to the prior art, one poses the problem of the vertical distance between the lower rolls and upper rolls, that must correspond to the glass thickness and therefore must be regulated for each link.

In the prior art, the distance between rolls is fixed when the rolls are still on a plane, i.e. before the bending step. It is here noted that the rolls touch the glass pane above and below at regular intervals. As shown indeed in figure 1, a shim 5 corresponding to the glass is inserted by hand before the bending of the glass pane between the upper and lower rolls, to fix the distance between upper and lower links. The upper and lower links have contact ends 2 and 3 respectively. When the glass pane in inserted and bent, the distance between rolls change and therefore in correspondence of the contact points the glass has at disposal a different space in height, thus obtaining a non-uniform curvature.

Document US2006/254317 A1 discloses an apparatus for bending a glass pane according to the preamble of herewith enclosed claim 1.

It is object of the present invention to provide an apparatus for the bending of glass panes that solves the problems and overcomes the drawbacks of the prior art.

It is subject-matter of the present invention an apparatus for bending a glass pane, comprising:
- a plurality of lower and upper rollers between which said glass pane can be positioned by making it slide along a sliding direction;
- a left bearing and a right bearing, each comprising an upper chain and a lower chain respectively constituted by upper and lower links reciprocally adjustable to form a curved profile, and to which the ends of said upper and lower rollers are respectively connected,
and characterized in that each left and right bearing is provided with an axle below said lower links, put into rotation by motorized means, on said axle being mounted rotation transmission elements in correspondence to each link, and in that for each link:
- a pinion is comprised, with a rotating element integrally connected to a screw at a first end of the screw and suitable to be put into rotation by the corresponding rotation transmission element;
- at the second, opposite end of said screw, an end element is screwed, which is hindered in rotation by suitable stop means, in such a way that, by the rotation of said screw, said end element moves along said screw;
- to said end element is connected a contrast element in such a way to be rotatable around a direction perpendicular to the direction of said axle, the contrast element being suitable to abut on a corresponding stop that is integral to a further link that is subsequent in the direction towards the center of said lower chain,
in such a way that, by the rotation of said axle, the position of the relevant end elements is concurrently and uniformly adjusted, and therefore the distance between said lower links, when in use they are mutually oriented to form said curved profile, is adjusted.

Preferably according to the invention, said stop is protruding from a surface that is integral to the corresponding link or to said center of said lower chain, said contrast element abutting, in use, laterally to said stop.

Preferably according to the invention, said stop means are constituted by said protruding stop, said end element hitting partially, in use, said stop.

Preferably according to the invention, to said pinion is connected to at least a bearing for a softer contact of the rotating element on said axle.

Preferably according to the invention:
- stops for the upper links are correspondingly, integrally connected to said lower links and are such to guarantee a minimum space between upper and lower links that corresponds to the thickness of said glass pane;
- said stops are adjusted by corresponding motorized devices, so as to adjust said minimum space;
- an adjustment electronic unit, which is configured to operate each of said corresponding motorized devices in such a way to maintain said minimum space during the bending of the glass pane.

Preferably, the subject-matter of the present invention is directed to an apparatus for bending a glass pane, comprising:
- a plurality of lower and upper rollers between which said glass pane can be positioned by making it slide along a sliding direction;
- a left bearing and a right bearing, each comprising an upper chain and a lower chain respectively constituted by upper and lower links reciprocally adjustable to form a curved profile, and to which the ends of said upper and lower rollers are respectively connected,
and characterized in that:
- stops for the upper links are correspondingly, integrally connected to said lower links and are such to guarantee a minimum space between upper and lower links that corresponds to the thickness of said glass pane;
- said stops are adjusted by corresponding motorized devices, so as to adjust said minimum space;
- an adjustment electronic unit, which is configured to operate each of said corresponding motorized devices in such a way to maintain said minimum space during the bending of the glass pane.

Preferably according to the invention, each of said corresponding motorized devices comprises a motor that operates a screw presenting a head constituting the relevant stop of said stops.

Preferably according to the invention, said adjustment electronic unit is adapted to act on the basis of a look-up table or a pre-determined function taking into account the various thicknesses and bending types of the glass pane.

Preferably according to the invention, the apparatus further comprises devices for measurement of the distance between the upper and lower rollers, adjustment electronic unit acting on said corresponding motorized devices on the basis of the values provided along time by said measurement devices.

The invention will be now described by way of illustration but not by way of limitation, with particular reference to the drawings of the annexed figures, wherein:
- Figure 1 shows a solution according to the prior art, wherein the bending radius of the glass is adjusted by a cascade mechanism;
- Figure 2 shows in (a) a front view of the apparatus according to the invention, and in (b) a lateral view of the apparatus according to the invention, with two side main bearings for the bending of the glass;
- Figure 3 shows a first view of a detail of the bending chain of a side main bearings of the apparatus of figure 2, with the chain that is slightly bent;
- Figure 4 shows a second view of a detail of the bending chain of a side main bearings of the apparatus of figure 2;
- Figure 5 shows a third cross-section view of the bending chain of a side main bearings of the apparatus of figure 2, in adjustment configuration;
- Figure 6 shows a fourth cross-section view of the bending chain of a side main bearings of the apparatus of figure, in stop configuration;
- Figure 7 shows a fifth perspective view of a detail of the bending chain of a side main bearings of the apparatus of figure 2;

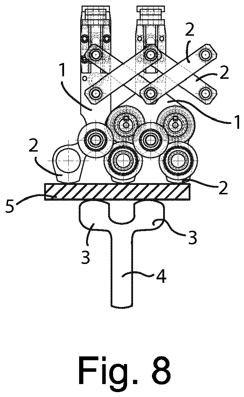

- Figure 8 shows an apparatus wherein the glass thickness is adjusted according to the prior art;
- Figure 9 shows a first view of a detail of the bending chain of a side main bearings of the apparatus of figure 2;
- Figure 10 shows a second view of a detail of the bending chain of a side main bearings of the apparatus of figure 2;
- Figure 11 shows the view of figure 9, in perspective;
- Figure 12 shows the correction of the error of local thickness obtained with the apparatus according to the invention.

### Uniform bending

According to the known art, to the links 210,310 are perpendicularly hooked the rolls 500. To bend the glass panes, the upper and lower rolls are utilized to realize the contrast. The links 210, 310 are disposed in such a way that the lower rolls are alternated with the upper rolls.

The mechanism of adjustment according to the invention is repeated in the left and right main bearings 1100 and 1200, that are parallel to the direction of sliding of the glass, and the adjustment is symmetrical, by two independent engines that however operate in a synchronous way.

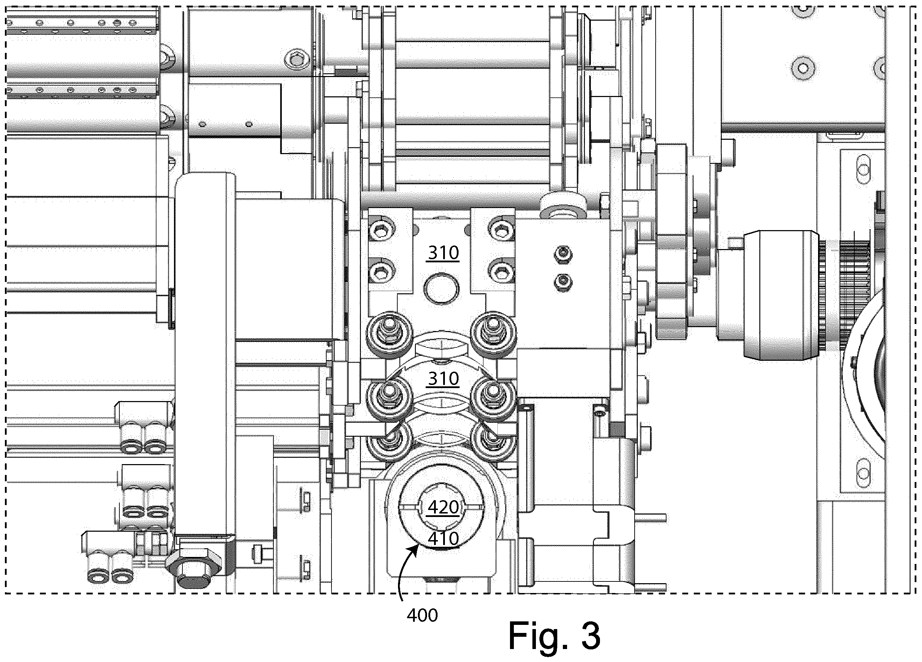

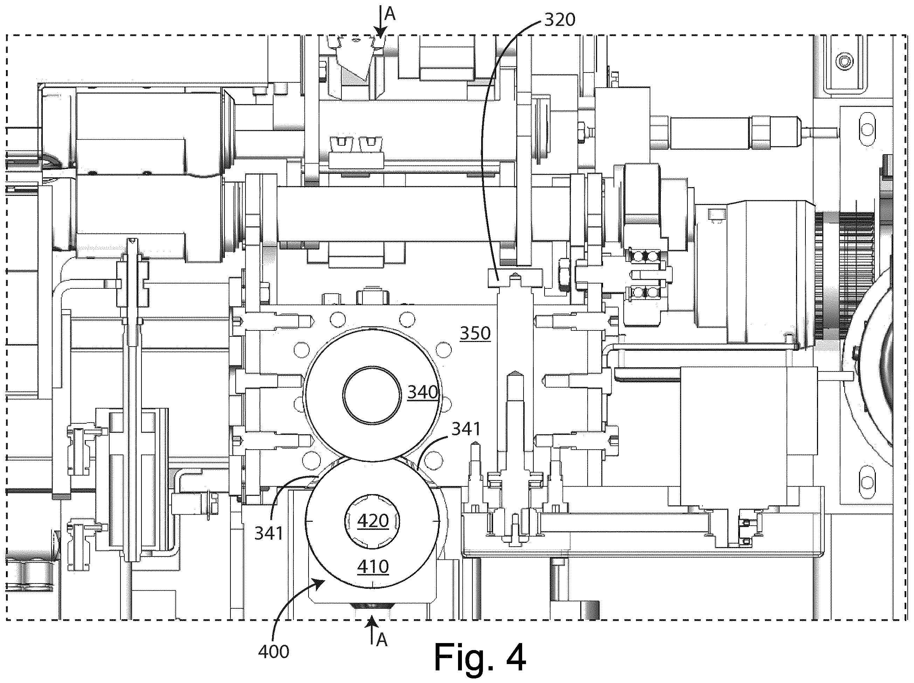

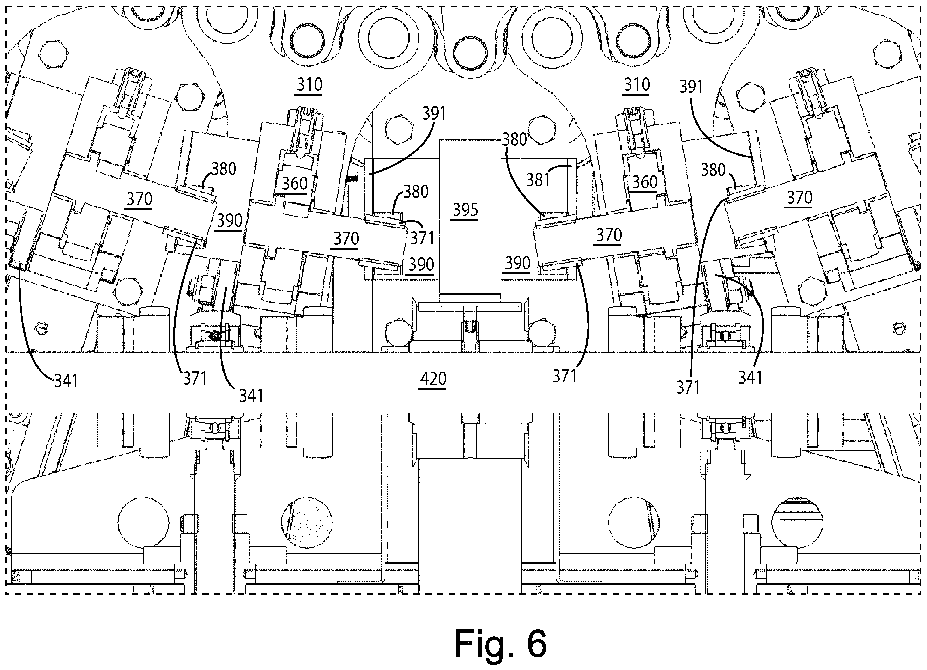

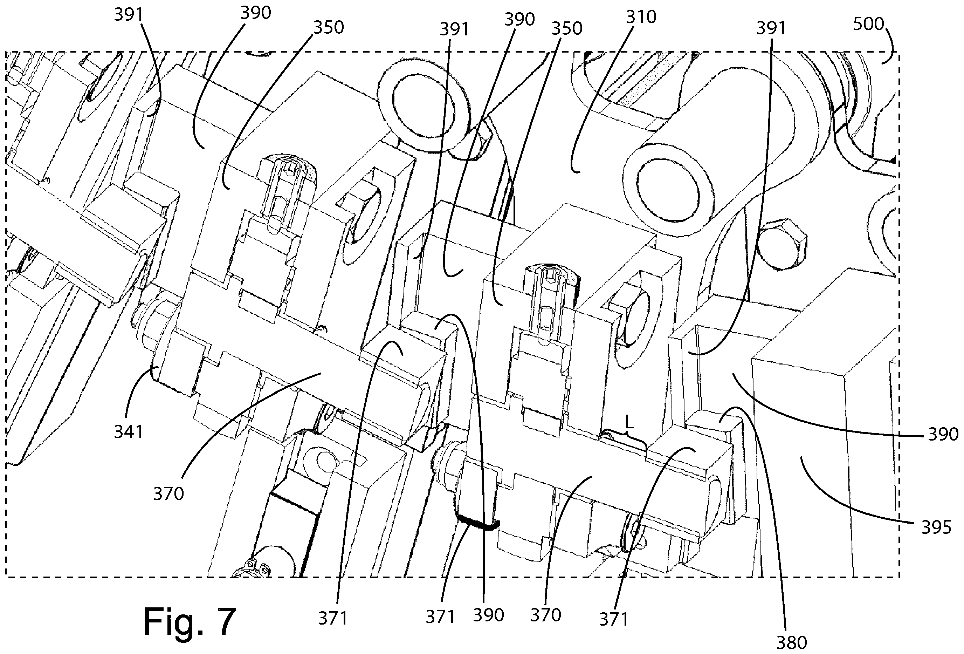

Making reference to figures 3-7, for each main bearings 1100, 1200 is provided an adjustment shaft 400 that is placed in such a way to act on the lower links 310. The adjustment shaft is composed by a shaft 420 and motion transmission elements 410 placed in a spaced-out way along the shaft 420. The motion transmission element 410 contact a respective pinion 340 of a link 310. Bearings 341 can be provided to the end of a more effective contact.

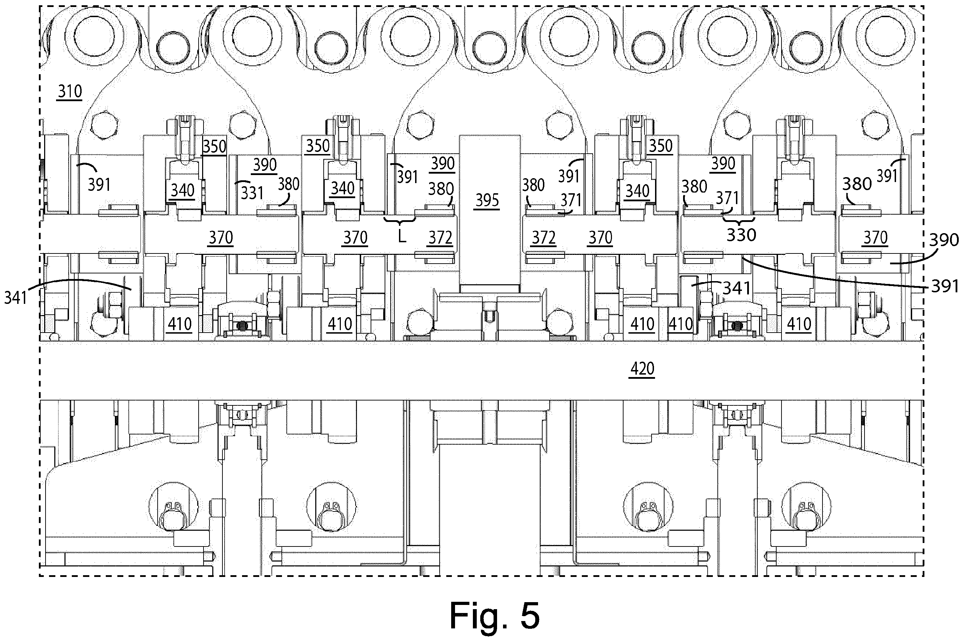

Making reference to figure 5, the motion transmission elements 410 transmit the rotation motion of the shaft 420 to the rotating element 340 of each pinion 350. The rotating element 340 is coupled to a spacer screw 370, which is therefore put in rotation.

At the end of the screw 372 pointed towards the center 395 of the chain, contrast means 371,380 are fixed, which are distant from pinion 350 of a distance L. This distance is exactly varied thanks to the action of the shaft and pinion.

Indeed, the means of contrast comprise an end element 371 screwed on said spacer screw 370, and there are stop means that impede the rotation of the same end element. In such a way, since it cannot rotate, the end element 371 slide along teh spacer screw 370 and therefore the distance between the same end element 371 and the pinion.

The contrast element 380 is rotatably connected to the end element 371, and is apt to come in contrast with suitable stops 391 that are integral to the pinion of the preceding link. As "preceding", it has to be here understood in the direction towards the center of the chain. Obviously, the center 395 of the chain will have two such stops 391, one at its right and another one at its left.

The stops 391 are elements protruding with respect to a surface 390 fast connected to a pinion 350 or at the center of the chain 395. The contrast element 380 beats laterally to said stops 391, whilst the end element 371 will partially and frontally contrast said stops 391, in such a way that it will not be rotatable (obviously this is only a way to realize the above stop means).

The fact that the contrast element 380 is rotatable is important, since, when the ends of the chain are drawn up by a hydraulic system, the stops 391 come out to be rotated with respect to the vertical and therefore a contrast element is needed that beats on the stops 391 always in the same way, so as to guarantee an always constant distance between the links even with bent chain. The stop is advantageously linear, and therefore also the corresponding side of the contrast element, however it is thinkable also to use form that correspond each other.

This implies also a uniform bending of the glass. Indeed, the fact of adjusting the pinion when the chain is still not lifted up allows to adjust them all together, and therefore to guarantee the uniformity of the curvature.

### Dynamic spacer

According to the prior art, the rolls 500 are hooked perpendicularly the links 210. In order to bend the glass panes, the upper and lower rolls are needed to realize the contrast. The links are disposed in such a way that the lower rolls are alternated with the upper rolls.

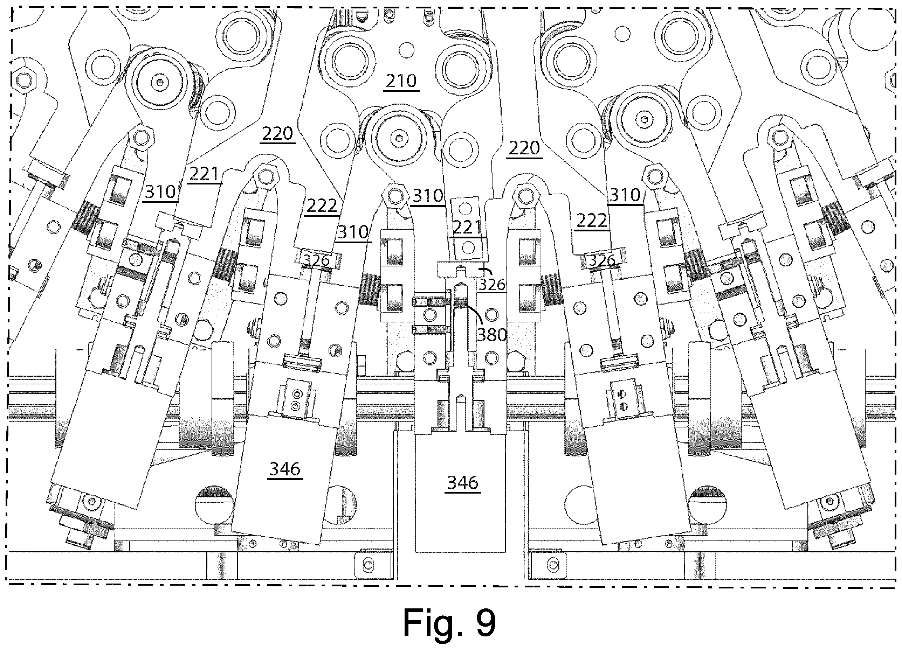

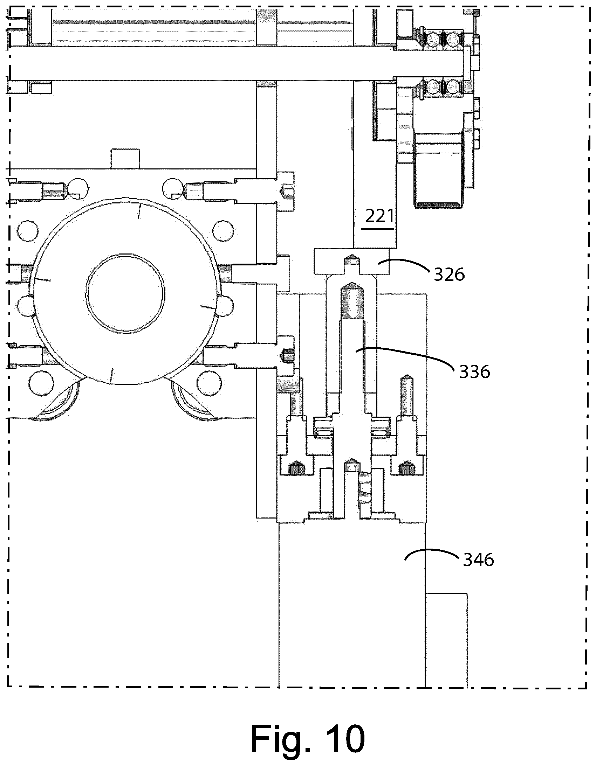

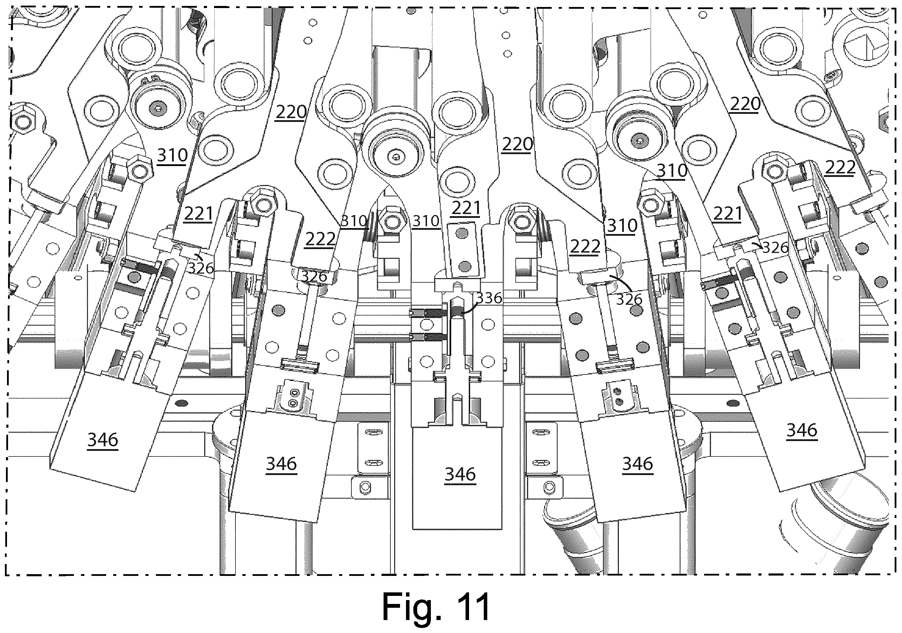

Making reference to figures 9-11, the solution according to the present invention provides a stop device 326 fixed to the lower links 310. The upper links 210 present plates 220 with arms 221,222 corresponding to stops 326, so that the distance can be adjusted.

According to an embodiment of the present invention, indeed, the lower stop device 326 is a device that is adjustable by the action o fan engine 346 in the same device, the stop being the head of a screw 336 that is made rotating to lower or lift the head itself.

This solution not only allows to adjust statically the distance before the bending, but also to adjust it during the bending.

Indeed, the motors of the stop devices are electronically controlled by a control electronic unit which operate them in a controller way along time, so a sto maintain the distance between rollers constant during the bending.

The electronic control can be realized by look-up table that takes into account the various thicknesses and bending types.

Alternatively, one can dispose at the ends of the rolls or elsewhere devices that are able to measure the distance between the rolls themselves, the engines being operated to maintain such a distance within very restricted ranges.

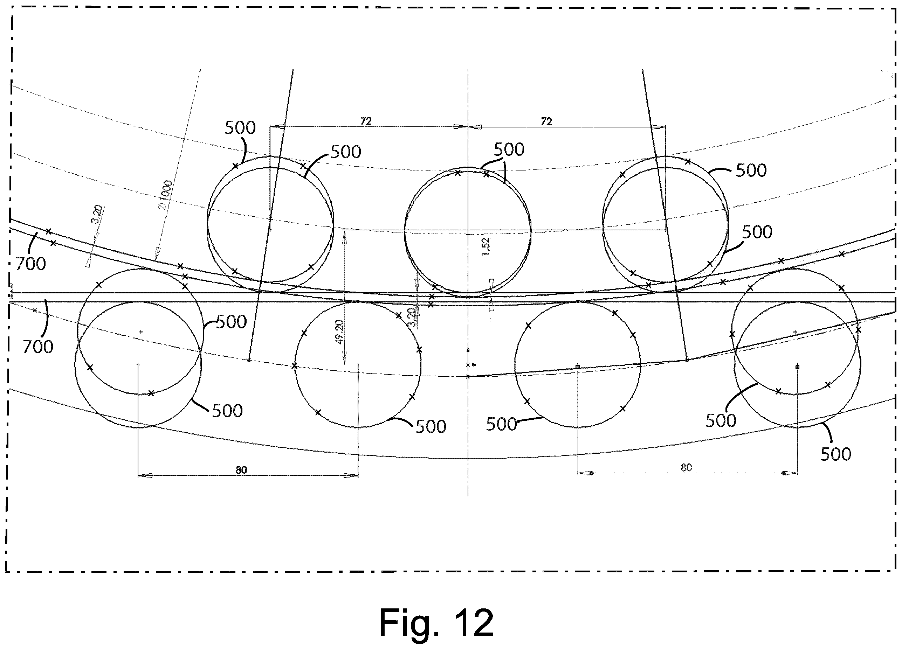

The effect of the solution according to the invention is shown in figure 12, wherein the position of the rolls 500 and glass pane 700 when it is not yet bent is shown with simple line. The positions of the elements during the bending is shown with line marked by crosses. As one sees in this example, the rated thickness of the glass pane must be 3,20 cm. However, if the central roll does not move, the glass in the center does not undergo pressure and therefore the space will be locally larger, in the example with thickness of 3,20 + 1,52 cm. This obviously makes the curvature non-uniform and is not desired.

If instead the distance between the links is adjusted according to the solution of the invention, then the desired thickness is obtained.

In the foregoing, embodiments have been described and variations to the present invention have been suggested, it is however to be understood that those skilled in the art can modify and change such embodiments, without departing from the relevant scope of protection, as defined by the attached claims.

## Claims

1. Apparatus (1000) for bending a glass pane (700), comprising:
- a plurality of lower and upper rollers (500,501,502,503) between which said glass pane (700) can be positioned by making it slide along a sliding direction;
- a left bearing (1100) and a right bearing (1200), each comprising an upper chain (200) and a lower chain (300) respectively constituted by upper (210) and lower (310) links reciprocally adjustable to form a curved profile, and to which the ends of said upper and lower rollers (500,501,502,503) are respectively connected,
and **characterized in that** each left and right bearing is provided with an axle (420) below said lower links (310), put into rotation by motorized means, on said axle being mounted rotation transmission elements (410) in correspondence to each link (310), and **in that** for each link:
- a pinion (350) is comprised, with a rotating element (340) integrally connected to a screw (370) at a first end of the screw (370) and suitable to be put into rotation by the corresponding rotation transmission element (410);
- at the second, opposite end of said screw, an end element is screwed (371), which is hindered in rotation by suitable stop means (391), in such a way that, by the rotation of said screw (370), said end element moves along said screw;
- to said end element (371) is connected a contrast element (380) in such a way to be rotatable around a direction perpendicular to the direction of said axle, the contrast element (380) being suitable to abut on a corresponding stop (391) that is integral to a further link (310) that is subsequent in the direction towards the center (395) of said lower chain (300),
in such a way that, by the rotation of said axle (420), the position of the relevant end elements (371) is concurrently and uniformly adjusted, and therefore the distance between said lower links (310), when they are mutually oriented to form said curved profile, is adjusted.

2. Apparatus according to claim 1, **characterized in that** said stop (391) is protruding from a surface (390) that is integral to the corresponding link (310) or to said center (395) of said lower chain (300), said contrast element (380) abutting, in use, laterally to said stop (391).

3. Apparatus according to claim 2, **characterized in that** said stop means are constituted by said protruding stop (391), said end element (371) hitting partially, in use, said stop (391).

4. Apparatus according to any claim 1-3, **characterized in that** to said pinion (350) is connected to at least a bearing (341) for a softer contact of the rotating element (340) on said axle (420).

5. Apparatus according to any claim 1-4, **characterized in that**:
- stops (326) for the upper links (210) are correspondingly, integrally connected to said lower links (310) and are such to guarantee a minimum space between upper and lower links that corresponds to the thickness of said glass pane (700);
- said stops (326) are adjusted by corresponding motorized devices (336,346), so as to adjust said minimum space;
- an adjustment electronic unit, which is configured to operate each of said corresponding motorized devices (336,346) in such a way to maintain said minimum space during the bending of the glass pane.

6. Apparatus according to claim 5, **characterized in that** ach of said corresponding motorized devices (336,346) comprises a motor (340) that operates a screw (336) presenting a head constituting the relevant stop (326) of said stops.

7. Apparatus according to any claim 5-6, **characterized in that** said adjustment electronic unit is adapted to act on the basis of a look-up table or a pre-determined function taking into account the various thicknesses and bending types of the glass pane.

8. Apparatus according to any claim 5-6, **characterized in that** it further comprises devices for measurement of the distance between the upper and lower rollers (500,501,502,503), adjustment electronic unit acting on said corresponding motorized devices (336,346) on the basis of the values provided along time by said measurement devices.

## Patentansprüche

1. Vorrichtung (1000) zum Biegen eines Glasfeldes (700), die folgende Merkmale aufweist:
- eine Mehrzahl unterer und oberer Rollen (500, 501, 502, 503), zwischen denen das Glasfeld (700) positioniert werden kann, indem dasselbe entlang einer Gleitrichtung gleitet;
- ein linkes Lager (1100) und ein rechtes Lager (1200), die jeweils eine obere Kette (200) und eine untere Kette (300) aufweisen, die aus oberen (210) beziehungsweise unteren (310) Verknüpfungselementen ausgebildet sind, die wechselweise dahin gehend einstellbar sind, ein gekrümmtes Profil zu bilden, und mit denen die Enden der oberen beziehungsweise unteren Rollen (500, 501, 502, 503) verbunden sind,
und die **dadurch gekennzeichnet ist, dass** jedes linke und rechte Lager mit einer Achse (420) unter den unteren Verknüpfungselementen (310) versehen ist, die durch motorisierte Einrichtungen in Drehung versetzt wird, wobei auf der Achse Drehübertragungselemente (410) montiert sind, die jedem Verknüpfungselement (310) entsprechen, und darin, dass für jedes Verknüpfungselement:
- ein Ritzel (350) enthalten ist, wobei ein Drehelement (340) einstückig mit einer Schraube (370) an einem ersten Ende der Schraube (370) verbunden ist und dazu geeignet ist, durch das entsprechende Drehübertragungselement (410) in Drehung versetzt zu werden;
- an dem zweiten, gegenüberliegenden Ende der Schraube ein Endelement (371) angeschraubt ist, das durch eine geeignete Anschlageinrichtung (391) an einer Drehung gehindert wird, derart, dass sich das Endelement durch die Drehung der Schraube (370) entlang der Schraube bewegt;
- mit dem Endelement (371) ein Kontrastelement (380) derart verbunden ist, dass dasselbe um eine zu der Richtung der Achse senkrechte Richtung drehbar ist, wobei das Kontrastelement (380) dazu geeignet ist, an einem entsprechenden Anschlag (391) anzuschlagen, der mit einem weiteren Verknüpfungselement (310) einstückig ist, das in der Richtung zu der Mitte (395) der unteren Kette (300) hin nachfolgend ist,
derart, dass die Position der relevanten Endelemente (371) durch die Drehung der Achse (420) gleichzeitig und gleichmäßig eingestellt wird und daher der Abstand zwischen den unteren Verknüpfungselementen (310) eingestellt wird, wenn dieselben gemeinsam dahingehend ausgerichtet sind, das gekrümmte Profil auszubilden.

2. Vorrichtung gemäß Anspruch 1, die **dadurch gekennzeichnet ist, dass** der Anschlag (391) von einer Oberfläche (390) hervorsteht, die mit dem entsprechenden Verknüpfungselement (310) oder mit der Mitte (395) der unteren Kette (300) einstückig ist, wobei das Kontrastelement (380) bei Verwendung lateral an den Anschlag (391) anschlägt.

3. Vorrichtung gemäß Anspruch 2, die **dadurch gekennzeichnet ist, dass** die Anschlageinrichtung durch den hervorstehenden Anschlag (391) ausgebildet ist, wobei das Endelement (371) bei Verwendung teilweise auf den Anschlag (391) trifft.

4. Vorrichtung gemäß einem der Ansprüche 1-3, **dadurch gekennzeichnet, dass** das Ritzel (350) mit zumindest einem Lager (341) für einen nachgiebigeren Kontakt des Drehelementes (340) auf der Achse (420) verbunden ist.

5. Vorrichtung gemäß einem der Ansprüche 1-4, die **dadurch gekennzeichnet ist, dass**:
- Anschläge (326) für die oberen Verknüpfungselemente (210) entsprechend einstückig mit den unteren Verknüpfungselementen (310) verbunden sind und derart sind, einen Mindestraum zwischen oberen und unteren Verknüpfungselementen sicherzustellen, der der Dicke des Glasfeldes (700) entspricht;
- die Anschläge (326) durch entsprechende motorisierte Geräte (336, 346) eingestellt werden, um den Mindestraum einzustellen;
- eine elektronische Einstelleinheit, die dazu ausgebildet ist, jedes der entsprechenden motorisierten Geräte (336, 346) derart zu betätigen, beim Biegen des Glasfeldes den Mindestraum beizubehalten.

6. Vorrichtung gemäß Anspruch 5, die **dadurch gekennzeichnet ist, dass** jedes der entsprechenden motorisierten Geräte (336, 346) einen Motor (340) aufweist, der eine Schraube (336) betätigt, die einen Kopf aufweist, der den relevanten Anschlag (326) der Anschläge ausbildet.

7. Vorrichtung gemäß einem der Ansprüche 5-6, die **dadurch gekennzeichnet ist, dass** die elektronische Einstelleinheit dahingehend angepasst ist, auf der Basis einer Nachschlagtabelle oder einer vorbestimmten Funktion zu agieren, wobei die zahlreichen Dicken und Biegearten des Glasfeldes berücksichtigt werden.

8. Vorrichtung gemäß einem der Ansprüche 5-6, die **dadurch gekennzeichnet ist, dass** dieselbe ferner Geräte zum Messen des Abstandes zwischen den oberen und unteren Rollen (500, 501, 502, 503) aufweist, wobei die elektronische Einstelleinheit auf der Basis der Werte, die durch die Messgeräte im Laufe der Zeit bereitgestellt werden, auf die entsprechenden motorisierten Geräte (336, 346) einwirkt.

## Revendications

1. Appareil (1000) de pliage d'une vitre (700), comprenant
- une pluralité de rouleaux inférieurs et supérieurs (500, 501, 502, 503) entre lesquels ladite vitre (700) peut être positionnée en la faisant glisser dans une direction de glissement,
- un roulement gauche (1100) et un roulement droit (1200) comportant chacun une chaîne supérieure (200) et une chaîne inférieure (300) constituées respectivement par des maillons supérieurs (210) et inférieurs (310) réglables les uns par rapport aux autres pour former un profil courbé et auxquelles les extrémités des rouleaux supérieurs et inférieurs (500, 501, 502, 503) sont reliées respectivement,
et **caractérisé en ce que** chaque roulement gauche et droit est pourvu d'un axe (420) en dessous des maillons inférieurs (310) mis en rotation par des moyens motorisés, des éléments de transmission de rotation (410) en correspondance avec chaque maillon (310) étant montés sur l'axe, et **en ce que**, pour chaque maillon,
- un pignon (350) est compris, avec un élément de rotation (340) entièrement relié à une vis (370) à une première extrémité de la vis (370) et adapté pour être mis en rotation par un élément de transmission de rotation (410) correspondant,
- à la seconde extrémité, opposée, de la vis, un élément d'extrémité (371) est vissé qui est empêché de rotation par des moyens d'arrêt (391) appropriés, de manière que, par la rotation de ladite vis (370), l'élément d'extrémité des déplace le long de la vis,
- audit élément d'extrémité (371) est relié un élément de contraste (380) de façon à pouvoir être tourné autour d'une direction perpendiculaire à la direction de l'axe, l'élément de contraste (380) étant adapté pour buter sur un arrêt (391) correspondant qui est intégré dans un autre maillon (310) qui est adjacent dans la direction vers le centre (395) de la chaîne inférieure (300),
de façon que, par la rotation de l'axe (420), la position des éléments d'extrémité (371) correspondants est ajustée en permanence et de manière uniforme, et ainsi la distance entre les maillons inférieurs (310) est ajustée lorsqu'ils sont orientés réciproquement pour former le profil courbé.

2. Appareil selon la revendication 1, **caractérisé en ce que** l'arrêt (391) s'élève sur une surface (390) qui fait partie du maillon (310) respectif ou du centre (395) de la chaîne inférieure (300), l'élément de contraste (380) butant, en fonctionnement, latéralement à l'élément d'arrêt (391).

3. Appareil selon la revendication 2, **caractérisé en ce que** les éléments d'arrêt sont constitués par l'arrêt (391) proéminant, l'élément d'extrémité (371) frappant en partie, en fonctionnement, l'arrêt (391).

4. Appareil selon l'une des revendications 1 à 3, **caractérisé en ce que** le pignon (350) est relié à au moins un roulement (341) pour un contact plus doux de l'élément de rotation (340) sur l'axe (420).

5. Appareil selon l'une des revendications 1 à 4, **caractérisé en ce que**
- des arrêts (326) pour les maillons supérieurs (210) sont reliés intégralement, de manière correspondante, aux maillons inférieurs (310) et sont faits de façon à garantir un espace minimal entre les maillons supérieurs et inférieurs qui correspond à l'épaisseur de la vitre (700),
- les arrêts (326) sont ajustés par des dispositifs motorisés (336, 346) correspondants, afin d'ajuster l'espace minimal,
- une unité électronique d'ajustement qui est configurée pour faire fonctionner chacun des dispositifs motorisés (336, 346) correspondants de façon que l'espace minimal soit maintenu pendant le pliage de la vitre.

6. Appareil selon la revendication 5, **caractérisé en ce que** chacun des dispositifs motorisés (336, 346) comprend un moteur (340) qui fait fonctionner une vis (336) comprenant une tête constituant l'arrêt (326) adéquat des arrêts.

7. Appareil selon l'une des revendications 5 à 6, **caractérisé en ce que** l'unité électronique d'ajustement est adaptée pour agir sur la base d'une table de recherche ou d'une fonction prédéterminée prenant en compte les différentes épaisseurs et types de pliage de la vitre.

8. Appareil selon l'une des revendications 5 à 6, **caractérisé en ce qu'**il comprend en outre des dispositifs pour mesurer la distance entre les rouleaux supérieurs et inférieurs (500, 501, 502, 503), l'unité électronique d'ajustement agissant sur les dispositifs motorisés (336, 346) correspondants sur la base des valeurs fournies dans le temps par les dispositifs de mesure.
